# EUROPEAN PATENT APPLICATION

(11) **EP 2 905 124 A1**
(43) Date of publication of application: **12.08.2015**
(21) Application number: 13844319.7
(22) Date of filing: 12.09.2013
(51) Int. Cl.: B29D 30/10, B29C 35/02, B29L 30/00

(54) **TIRE MANUFACTURING METHOD AND TIRE MANUFACTURING LINE**

(30) Priority: 02.10.2012 JP 2012220316
(71) Applicant: Sumitomo Rubber Industries, Ltd., Kobe-shi, Hyogo 651-0072 (JP)
(72) Inventor: ONIMATSU Hiroyuki, Kobe-shi Hyogo 651-0072 (JP)
(74) Representative: Manitz, Finsterwald & Partner GbR
(86) International application number: PCT/JP2013/074736
(87) International publication number: WO 2014/054403

(57) **Abstract**

In order to simultaneously and randomly form tires of multiple, different sizes on a single line, this tire manufacturing method comprises: a green tire formation step of, on a member assembly devi ce having a plurality of work stations arranged along a track, assembling the ti re constituent members to an outer surface of a rigid core moving on the track at the work stations ; and a vulcanization step of putting the green tire with the rigid core into the vulcanization molds. Each time the rigid core is carried into the work station, the size of the carried rigid core is identified, and data on the attachment condition according to the identified size from identification information and data on the attachment condition for the member material according to the size of the rigid core stored in advance in the control device is determined. The member assembly device is carried based on the determined data is controlled.

## Description

### Technical Field

The present invention relates to a tire manufacturing method and a tire manufacturing line that allow tires of plural sizes to be formed simultaneously and at random on one line.

### Background Art

In recent years, it has been desired to form tires of plural sizes simultaneously on one line in order to downsize plant equipment and increase the working ratio of vulcanization molds.

The reason for the demand is described below. To manufacture tires, it takes a largest amount of time in the process for tire vulcanization. Therefore, for enhancement of the tire production efficiency, it is necessary to prepare a large number of vulcanization molds and approximate the number of tires vulcanized per unit time to the number of green tires. It is also necessary to prepare tires of plural sizes for each ti re type to support various car models. This increases the number of sizes of vulcanization molds.

Therefore, in the case of producing ti res of one size in lots, vulcanization molds of only one size are used and many vulcanization molds of the other sizes remain stored. As a result, the working ratio of vulcanization molds becomes significantly low. In addition, a large space is needed for storage of the vulcanization molds, which leads to increase in size of the plant. I n contrast, in the case of forming simultaneously tires of plural sizes, vulcanization molds of plural sizes can be used simultaneously to improve the working ratio of the vulcanization molds. In addition, a storage space for the vulcanization molds can be reduced to achieve downsizing of the plant.

However, according to the conventional production method and production line, it is difficult to form simultaneously tires of plural sizes.

According to the conventional production method, green tires are formed through the following processes for:
(1) winding sequentially an inner liner rubber, a carcass ply, and the like around a cylindrical formation drum, for example, to form a cylindrical body;
(2) inserting externally bead cores into both end portions of the cylindrical body and folding back the both end portions of the cylindrical body around the bead cores;
(3) winding sequentially a bel t ply, a band pl y, a tread rubber, and the like around a tread formation drum to form a tread ring;
(4) transferring the cylindrical body with the both end portions folded back to a shaping former and keeping the tread rubber in a waiting state at a radial outside of the shaping former;
(5) bulging the cylindrical body in a troidal shape on the shaping former and joining and integrating the bulged portion to an inner peripheral surface of the tread ri ng; and the like. For example, a si de wall rubber, a chafer rubber, a bead apex rubber, and the like are attached as appropriate in the foregoing process (1), (5), or the like.

At that ti me, ti re constituent members such as the inner liner rubber, carcass ply, bead core, belt ply, band ply, tread rubber, side wall rubber, chafer rubber, and bead apex rubber are processed in advance off the line in various widths, various cross section shapes, or various cord angles, according to tire sizes. The pre-processed tire constituent members are temporarily stored as semi-finished members. Then, at the time of formation of tires, the pre-processed ti re constituent members adapted to the sizes of ti res to be formed are introduced into a production line. In addition, the formation drum, tread formation drum, and the like are replaced according to the tire sizes.

Therefore, the conventional production method and production line are sui ted to so-called lot production by whi ch ti res of a si ngl e size are produced in high volume, but are difficult to use for simultaneous formation of tires of plural sizes.

Accordingly, the inventor of the present invention has noticed and studied a tire formation method using a rigid core (hereinafter, referred to as "core production method"). The "core production method" is practiced, as described in Patent Document 1 shown below, using a rigid core having an outer shape almost equal to a ti re luminal surface of a vulcanized tire. Specifically, tire constituent members are sequentially assembled to an outer surface of a rigid core to form a green tire. Then, the green tire with the rigid core is put into a vulcanization mold and sandwiched between the rigid core as an inner mold and the vulcanization mold as an outer mold to vulcanize the green tire.

According to the core production method as described above, the ti re constituent members are assembl ed directly to the ri gi d core to eliminate the need for conventional replacement of the formation drum, tread formation drum, and the like. Therefore, if rigid cores of plural sizes are used and the tire constituent members can be sequentially formed and attached to the rigid cores according to the sizes of the rigid cores, it is possible to form simultaneously ti res of plural sizes.

### Citation List

### Patent Literature

Patent Document 1: Japanese Unexamined Patent Application Publication No. 2006-160236

### Summary of Invention

### Technical Problem

An object of the present invention is to provide a tire manufacturing method and a tire manufacturing line that allow tires of plural sizes to be formed simultaneously and at random on one line and achieve downsizing of plant equipment and improvement in working ratio of vulcanization molds.

### Solution to Problem

The present invention is a tire manufacturing system, including: a green tire formation zone for forming a green tire; a vulcanization zone for vulcanizing the green tire; an inspection and discharge zone for inspecting and discharging the vulcanized tire; and a material storage zone for storing materials for green tire formation, wherein the green tire formation zone has a track and a plurality of work stations arranged along the track, where a green tire is formed by assembling a tire constituent member to an outer surface of a rigid core moving on the track at each of the work stations, the track is composed of a horizontally-long, square-cornered U-shaped bending track including a pair of lateral track parts extended in a lateral direction and parallel to each other and a vertical track part connecting end portions of the lateral track parts at one lateral side, each of the work stations includes a member assembly device that forms the tire constituent member by attaching a member material for tire constituent member set for each of the tire constituent members to a surface of the rigid core, under an attachment condition determined according to size of the rigid core, the member assembly devices being arranged at an outer peripheral side of the square-cornered u-shaped bending track and along the lateral track parts, the material storage zone is arranged adjacent to one lateral side of the square-cornered U-shaped bending track, and stores member materials to be used by the member assembly devices or intermediate materials for formation of the member materials so as to be capable of being supplied to the member assembly devices, the vulcanization zone is arranged adjacent to the other lateral side of the square-cornered U-shaped bending track, and the inspection and discharge zone is arranged adjacent to the other lateral side of the vulcanization zone.

### Advantageous Effects of invention

First and the second inventions are constructed as mentioned above. Therefore, green tires of plural sizes can be formed simultaneously, efficiently and at random on one line. As a result, vulcanization molds of plural sizes can be used simultaneously to improve the working ratio of the vulcanization molds. In addition, a storage space for the vulcanization molds can be reduced to achieve downsizing of the plant.

### Brief Description of Drawings

Fig. 1 is a conceptual plane view of one example of a tire manufacturing line according to the present invention;
Fig. 2 is an enlarged conceptual plane view of the green ti re formation line;
Figs. 3A and 3B are operational diagrams describing control operations by a control device;
Fig. 4 is a cross-sectional view of one example of a green ti re formed on the green ti re formation line of the present invention;
Figs. 5A to 5C are perspective views of member materials for forming tire constituent members;
Fig. 6 is an illustrative diagram showing a method for forming a tread rubber (tire constituent member) from a rubber strip (member material);
Figs. 7A to 7D are illustrative diagrams showing a method for forming a carcass ply (tire constituent member) from a cord strip (member material);
Figs. 8A to 8C are illustrative diagrams showing a method for formi ng a bel t ply (tire constituent member) from a cord strip (member material);
Fig. 9 is a side view of a rubber strip attachment device;
Fig. 10 is a side view of a wire attachment device;
Fig. 11 is a side view of a cord strip attachment device;
Fig. 12 is a side view of the cord strip attachment device;

### Description of Embodiments

Embodiment of the present invention will be described below in detail.

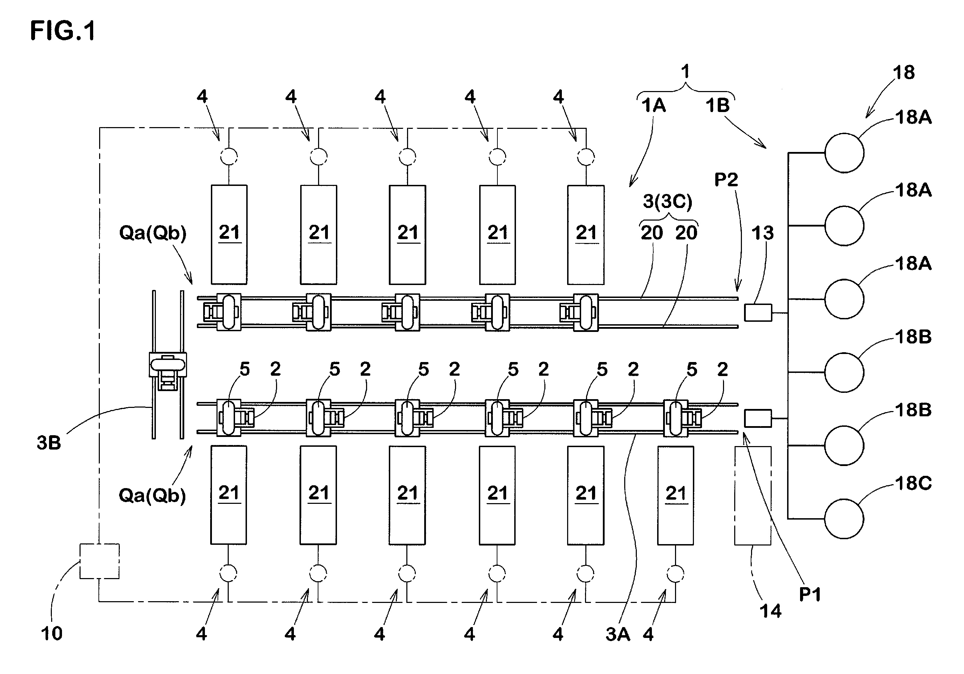

As shown in Fig. 1, a tire manufacturing line 1 according to the embodiment includes a green tire formation line 1A a tire vulcanization line 1B.

The green tire formation line 1A includes a track 3 and a plurality (n) of work stations 4 arranged along the track 3. On the green tire formation line 1A, a green tire formation step is performed to form a green tire 6 by attaching tire constituent members T to an outer surface of a rigid core 5 moving on the track 3 in the order of arrangement at the work stations 4.

The tire vulcanization line 1B has a plurality of vulcanization molds 18. On the tire vulcanization line 1B, a vulcanization step is performed to put the green tires 6 with the rigid cores 5 into the vulcanization molds 18 to vulcanize the green tires 6.

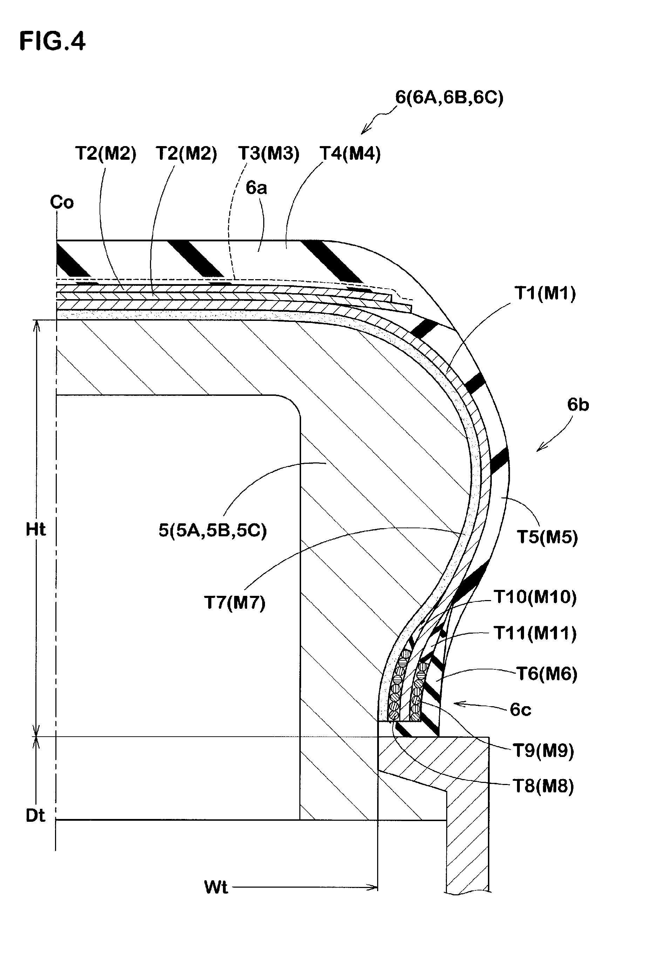

Fig. 4 shows one example of the green tire 6 formed on the green tire formation line 1A. In this example, the green tire 6 is composed of the plurality of (n = 11) tire constituent members T as:
(A) one or more carcass plies T1 (one in this example) that is extended from a tread part 6a through a side wall part 6b to a bead part 6c;
(B) one or more belt plies T2 (two in this example) that are arranged at a radial outside of the carcass ply T1 and at an inside of the tread part 6a;
(C) one or more band plies T3 (one in this example) that is arranged on a further radial outside of the belt plies T2;
(D) a tread rubber T4 that constitutes an outer surface of the tread part 6a;
(E) a side wall rubber T5 that constitutes an outer surface of the side wall part 6b;
(F) a chafer rubber T6 for prevention of rim shift that constitutes an outer surface of the bead part 6c;
(G) an inner liner rubber T7 that constitutes a tire luminal surface;
(H) inner and outer bead cores T8 and T9 that are arranged at the bead part 6c to sandwich a radially inner end portion of the carcass ply T1 from tire axial inside and outside; and
(I) inner and outer bead apex rubbers T10 and T11 for reinforcement of beads erected from the inner and outer bead cores T8 and T9, respectively.

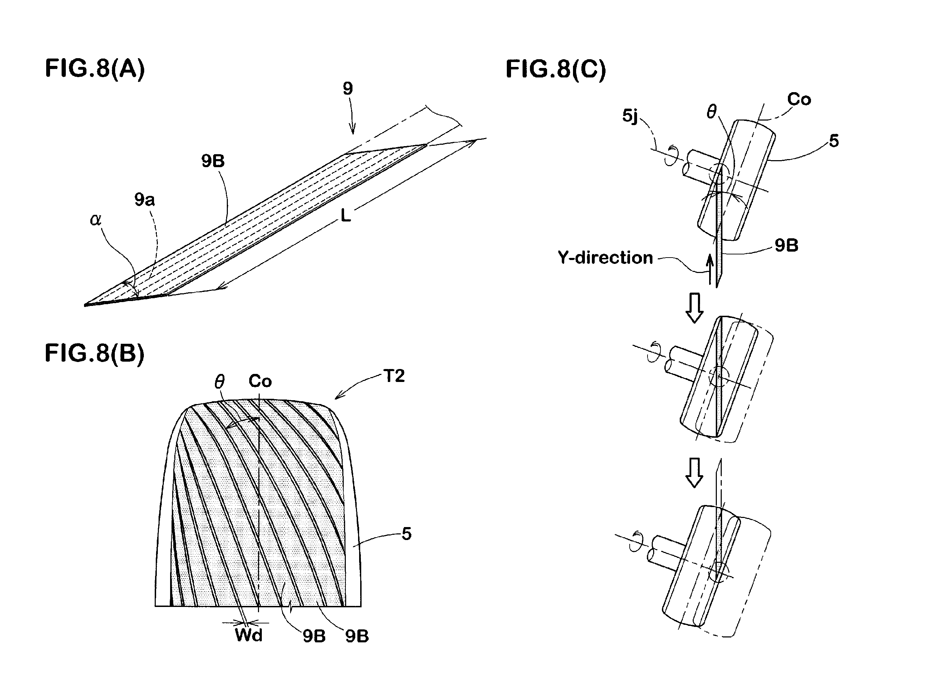

The carcass ply T1 has carcass cords arranged at an angle of 90° relative to a tire equator Co, for example, and a topping rubber covering the carcass cords. The belt plies T2 each has belt cords arranged at an angle θ of 10 to 40° relative to the tire equator Co (as shown in Fig. 8) and a topping rubber covering the belt cords. The band ply T3 has band cords arranged in a tire circumferential direction and a topping rubber covering the band cords.

The plurality (n = 11) of tire constituent members T1 to T11 constituting the green tire 6 are formed such that member materials M1 to M11 set for each of the ti re constituent members T1 to T11 are attached under attachment conditions J determined according to the sizes of the rigid core 5.

For example, when the green tires 6 of three sizes A, B, and C are to be formed,
(a) the green ti re 6A of the size A is formed by attaching the following members to the outer peripheral surface of a rigid core 5A:
   a tire constituent member T1A formed by attaching a member material M1 under an attachment condition J1A;
   a tire constituent member T2A formed by attaching a member material M2 under an attachment condition J2A;
   a tire constituent member T3A formed by attaching a member material M3 under an attachment condition J3A;
   a tire constituent member T4A formed by attaching a member material M4 under an attachment condition J4A;
   a tire constituent member T5A formed by attaching a member material M5 under an attachment condition J5A;
   a tire constituent member T6A formed by attaching a member material M6 under an attachment condition J6A;
   a tire constituent member T7A formed by attaching a member material M7 under an attachment condition J7A;
   a tire constituent member T8A formed by attaching a member material M8 under an attachment condition J8A;
   a tire constituent member T9A formed by attaching a member material M9 under an attachment condition J9A;
   a tire constituent member T10A formed by attaching a member material M10 under an attachment condition J10A; and
   a tire constituent member T11A formed by attaching a member material M11 under an attachment condition J11A.

The green tire 6B of the size B is formed by attaching the following members to the outer peripheral surface of a rigid core 5B:
a tire constituent member T1B formed by attaching the member material M1 under an attachment condition J1B;
a tire constituent member T2B formed by attaching the member material M2 under an attachment condition J2B;
a tire constituent member T3B formed by attaching the member material M3 under an attachment condition J3B;
a tire constituent member T4B formed by attaching the member material M4 under an attachment condition J4B;
a tire constituent member T5B formed by attaching the member material M5 under an attachment condition J5B;
a tire constituent member T6B formed by attaching the member material M6 under an attachment condition J6B;
a tire constituent member T7B formed by attaching the member material M7 under an attachment condition J7B;
a tire constituent member T8B formed by attaching the member material M8 under an attachment condition J8B;
a tire constituent member T9B formed by attaching the member material M9 under an attachment condition J9B;
a tire constituent member T10B formed by attaching the member material M10 under an attachment condition J10B; and
a tire constituent member T11B formed by attaching the member material M11 under an attachment condition J11B.

The green tire 6C of the size C is formed by attaching the following members to the outer peripheral surface of a rigid core 5C:
a tire constituent member T1C formed by attaching the member material M1 under an attachment condition J1C;
a tire constituent member T2C formed by attaching the member material M2 under an attachment condition J2C;
a tire constituent member T3C formed by attaching the member material M3 under an attachment condition J3C;
a tire constituent member T4C formed by attaching the member material M4 under an attachment condition J4C;
a tire constituent member T5C formed by attaching the member material M5 under an attachment condition J5C;
a tire constituent member T6C formed by attaching the member material M6 under an attachment condition J6C;
a tire constituent member T7C formed by attaching the member material M7 under an attachment condition J7C;
a tire constituent member T8C formed by attaching the member material M8 under an attachment condition J8C;
a tire constituent member T9C formed by attaching the member material M9 under an attachment condition J9C;
a tire constituent member T10C formed by attaching the member material M10 under an attachment condition J10C; and
a tire constituent member T11C formed by attaching the member material M11 under an attachment condition J11C.

Specifically, the tire constituent members T1 to T11 are divided into rubber members TG, cord ply members TC, and wire members TW. In this example, the rubber members TG include the tread rubber T4, the side wall rubber T5, the chafer rubber T6, the inner liner rubber T7, and inner and outer bead apex rubbers T10 and T11. The cord ply members TC include the carcass ply T1, the belt plies T2, and the band ply T3. The wire members TW include the inner and outer bead cores T8 and T9.

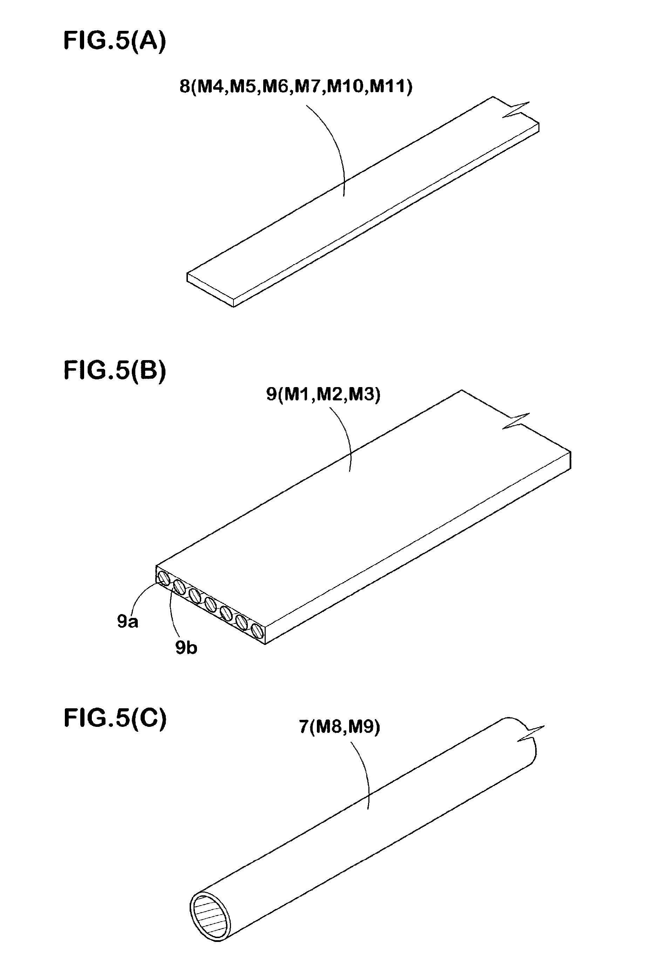

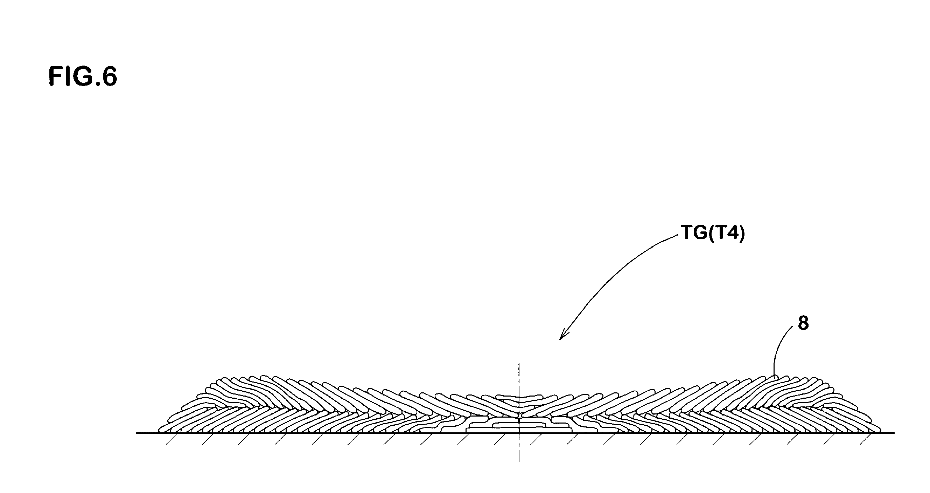

Elongated tape-like rubber strip 8 is used for each of the member material M4 for the tread rubber T4, the member material M5 for the side wall rubber T5, the member material M6 for the chafer rubber T6, the member material M7 for the inner linerrubber T7, and the member materials M10 and M11 for the inner and outer bead apex rubbers T10 and T11, which constitute the rubber member TG, as shown in Fig. 5A. The so-called strip winding method (STW method) by which to wi nd a strip in a spi ral is applied to the rubber strip 8 as shown in Fig. 6. By changing such conditions as the spiral pitch for winding and the number of windings, for example, the rubber member TG can be formed as appropriate in a desired cross-section shape and cross-section size. Similarly, by adjusting the foregoing conditions, the size of the rubber member TG can be adapted to the size of the rigid core 5. Therefore, the attachment conditions J4, J5, J6, J7, J10, and J11 for the member materials M4, M5, M6, M7, M10, and M11 may include the spiral pitch, the number of windings, and the like. As a matter of course, the rubber composition and cross-section dimensions of the rubber strip 8 can be set for each of the member materials M4, M5, M6, M7, M10, and M11.

Elongated tape-like cord strip 9 formed by covering an arrangement of tire cords 9a aligned in the longitudinal direction with a topping rubber 9b is used for each of the member material M1 for the carcass ply T1, the member material M2 for the belt plies T2, and the member material M3 for the band ply T3, which constitute the cord ply member TC, as shown in Fig. 5B.

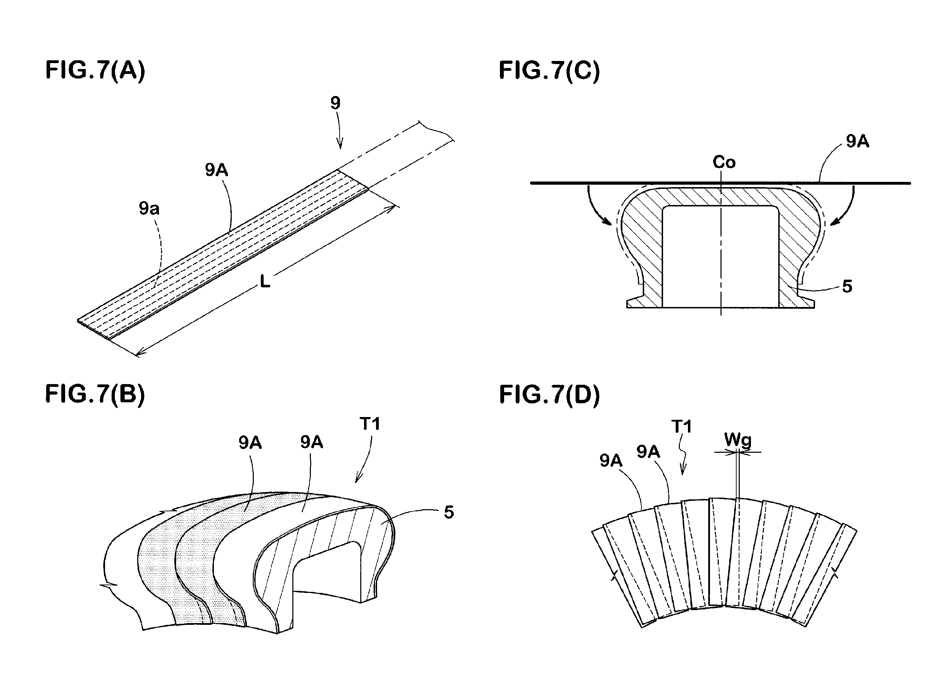

The carcass ply T1 is formed, as shown in Figs. 7A to 7D, such that short strip pieces 9A obtained by cutting the cord strip 9 in a predetermined length are sequentially attached in the tire circumferential direction with the tire cords 9a perpendicular to the tire equator Co. At that time, by adjusting cut length L of the short strip pieces 9A, overlapping width Wg (or a gap) between the short strip pieces 9A, the number of circumferentially attached short strip pieces 9A, or the like, the size of the carcass ply T1 can be adapted to the size of the rigid core 5. Therefore, the attachment condition J1 for the member material M1 may include the cut length L of the short strip pieces 9A, the overlapping width Wg (or a gap) between the short strip pieces 9A, the number of the circumferentially attached short strip pieces 9A, or the like.

The belt plies T2 are formed, as shown in Figs. 8A to 8C, such that short strip pieces 9B obtained by cutting obliquely the cord strip 9 in a predetermined length are sequentially attached in the tire circumferential direction with the tire cords 9a inclined at the angle θ relative to the tire equator Co. At that time, by adjusting cutting angle α and cutting length L of the short strip pieces 9B, gap Wd between the short strip pieces 9B, the number of circumferentially attached short strip pieces 9B, attachment angle θ (θ = α), or the like, the size of the belt plies T2 can be adapted to the size of the rigid core 5. Therefore, the attachment condition J2 for the member material M2 may include the cutting angle α and the cutti ng length L of the short strip pi eces 9B, the gap Wd between the short strip pieces 9B, the number of circumferentially attached short strip pieces 9B, the attachment angle θ (θ = α), or the like.

The band ply T3 is formed by winding continuously the cord strip 9 in a spiral in the tire circumferential direction. At that time, by adjusting the spiral pitch, the number of windings of the cord strip 9, or the like, the size of the band ply T3 can be adapted to the size of the rigid core 5. Therefore, the attachment condition J3 for the member material M3 may include the spiral pitch, the number of wi ndi ngs of the cord strip 9, or the like. As a matter of course, the material, thickness, inter-cord distance of the tire cords 9a, rubber composition of the topping rubber 9b, and the like in the cord strip 9 are set for each of the member materials M1, M2, and M3.

Rubberized wire 7 shown in Fig. 5C is used for each of the member materials M8 and M9 for the inner and outer bead cores T8 and T9 constituting the wire member TW. The bead cores T8 and T9 are formed by winding involutedly the rubberized wire 7 from a radial inside to outside. By adjusting the winding radius, the number of wi ndi ngs, or the like of the rubberized wi re 7, the sizes of the bead cores T8 and T9 can be adapted to the size of the rigid core 5. Therefore, the attachment conditions J8 and J9 for the member materials M8 and M9 may include the winding radius, the number of windings, or the like of the rubberized wire 7.

Next, the rigid core 5 includes rigid cores of plural sizes to form tires of different sizes. In this example, rigid cores 5A, 5B, and 5C of three sizes are used, for instance, to form green ti res 6A, 6B, and 6C of three sizes simultaneously on one line. The rigid cores 5A, 5B, and 5C are different in at least one of bead diameter Dt, bead width wt, cross-section height Ht, and the like, as shown in Fig. 4.

As shown in Fig. 1, the track 3 is formed as a folded square-cornered U-shaped bending track. Specifically, the track 3 is composed of lateral track parts 3A, 3C extended linearly and parallel to each other and a vertical track part 3B extended linearly between end portions of the lateral track parts 3A, 3C at one side. When the other end portion of the lateral track part 3A is set as a starting end position P1, the rigid core 5 is guided through the track part 3A, the track part 3B, and the track part 3C, to the end portion of the lateral track part 3C at the other side as a terminating end position P2. Bending sections Qa (as well as non-contiguous sections Qb) are formed at the intersection of the lateral track part 3A and the vertical track part 3B and at the intersection of the vertical track part 3B and the lateral track part 3C. In this example, the track 3 is formed by a pair of rails 20 parallel to each other.

Arranged in the plurality (n = 11) of work stations 4 along the track 3 are member assembly devices 21 for assembling the tire constituent members T to the rigid core 5 moving on the track 3. The member assembly devices 21 are controlled by a control device 10 to attach the member materials M under the attachment conditions J specified by the control device 10.

The rigid core 5 is carried on a core carrying cart 2 moving on the track 3. In this example, the core carrying cart 2 is provided at each of the work stations 4. The core carrying cart 2 moves in the work stations 4. Then, each of the core carrying carts 2 delivers the rigid core 5 in sequence to the adjacent core carrying cart 2 to carry the rigid core 5 from a starting end position P1 to a terminating end position P2. The delivery and carrying makes it possible to form bending sections Qa and discontinuous sections Qb in the track 3 and increase the degree of freedom for the track 3 and the degree of flexibility in plant designing. Alternatively, the track 3 can be entirely formed in a smooth curve line or a straight line such that the rigid core 5 can be carried on one core carrying cart 2 from the starting end position P1 to the terminating end position P2.

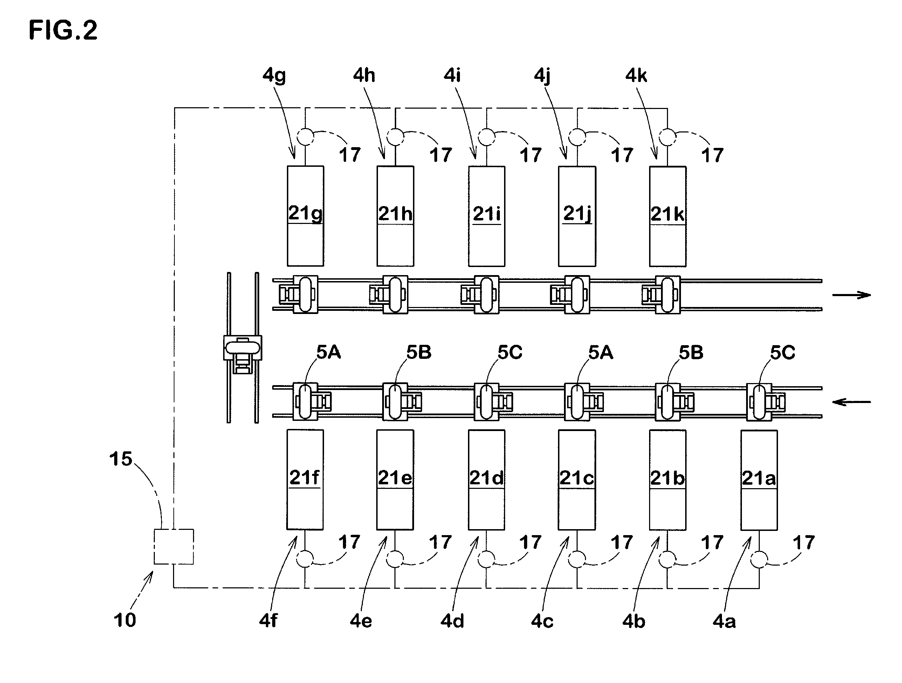

In this example, as shown in the enlarged view of Fig. 2, the work station 4 is composed of:
(1) a first work station 4a that includes a member assembly device 21a for assembling the chafer rubber T6 as member assembly device 21;
(2) a second work station 4b that includes a member assembly device 21b for assembling the inner linerrubber T7 as member assembly device 21;
(3) a third work station 4c that includes a member assembly device 21c for assembling the inner bead core T8 as member assembly device 21;
(4) a fourth work station 4d that includes a member assembly device 21d for assembling the inner bead apex rubber T10 as member assembly device 21;
(5) a fifth work station 4e that includes a member assembly device 21e for assembling the carcass ply T1 as member assembly device 21;
(6) a sixth work station 4f that includes a member assembly device 21f for assembling the outer bead core T9 as member assembly device 21;
(7) a seventh work station 4g that includes a member assembly device 21g for assembling the outer bead apex rubber T11 as member assembly device 21;
(8) an eighth work station 4h that includes a member assembly device 21h for assembling the belt ply T2 as member assembly device 21;
(9) a ninth work station 4i that includes a member assembly device 21i for assembling the band ply T3 as member assembly device 21;
(10) a tenth work station 4j that includes a member assembly device 21j for assembling the side wall rubber T5 as member assembly device 21; and
(11) an eleventh work station 4k that includes a member assembly device 21k for assembling the tread rubber T4 as member assembly device 21. These stations are arranged in this order along the track 3.

The control device 10 controlling the member assembly devices 21a to 21k includes a storage part 15, an identification sensor (not shown), and a control unit 17.

The storage part 15 stores in advance data on the attachment conditions J for the member materials M determined according to the size of the rigid core 5. In this example, the storage part 15 stores data on the attachment conditions J1A to J11A for the member materials s M1 to M11 of size A, data on the attachment conditions J1B to J11B for the member materials M1 to M11 of size B, and attachment condi ti ons J1C to J11C for the member materials M1 to M11 of size C.

Each time the rigid core 5 is carried into the work station 4, the identification sensor identifies the size of the carried rigid core 5. In this example, the identification sensors are arranged at the work stations 4a to 4k to identify the size of the rigid core 5 carried into the first work station 4a, the size of the rigid core 5 carried into the second work station 4b, ... and the size of the rigid core 5 carried into the eleventh work station 4k, at each time of carrying. There is no particular limitation on the method of identification. For example, identification marks, IC tags, or the like are provided to the rigid cores 5 so that the identification sensors can read the marks or tags to identify the sizes of the rigid cores 5.

The control unit 17 controls the member assembly devices 21 at the work stations 4 into which the rigid cores are carried, based on identification information from the identification sensors and the data on the attachment conditions J determined from data stored in advance in the storage part 15 (data on the attachment conditions J according to the identified sizes).

In this example, the control unit 17 is provided to each of the member assembly devices 21. The storage part 15 downloads into the control unit 17 the data on the attachment condition J according to the identified size, based on the identification information from the identification sensor. The control unit 17 also controls the member assembly device 21 as a target, based on the data on the downloaded attachment condition J.

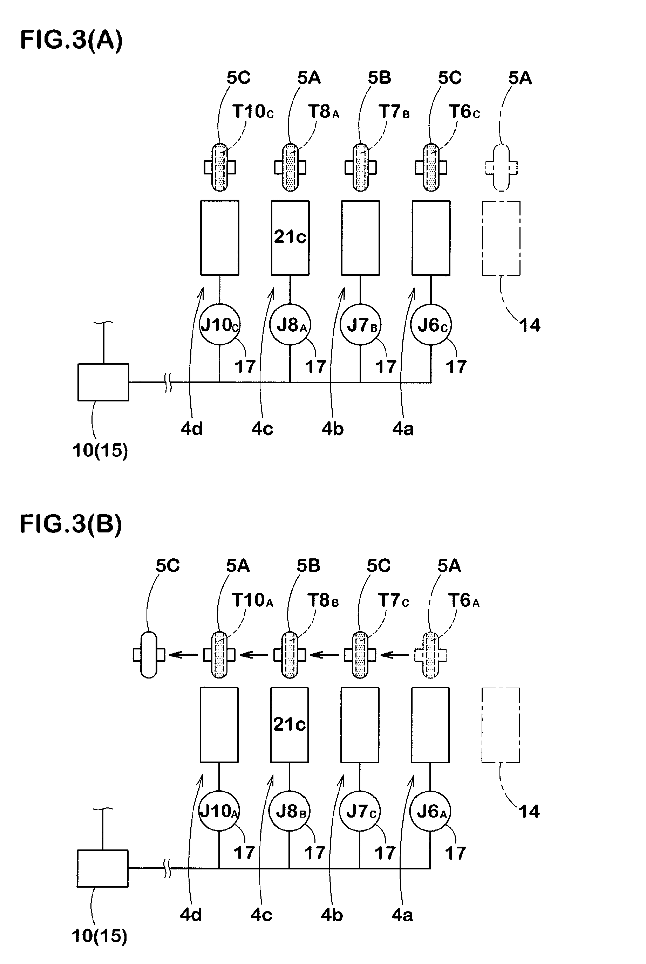

Fig. 3A shows conceptually the case where the ti re constituent members T are formed on the rigid cores 5 at the fi rst to fourth work stations 4a to 4d.

The thi rd work station 4c will be described as a representative. At the third work station 4c, the member material M8 is attached to the rigid core 5A based on the data on the attachment condition J8A to form the tire constituent member T8A (inner bead core).

Upon completion of the attachment, as shown in Fig. 3B, the rigid core 5A at the third work station 4c is carried to the fourth work station 4d at the downstream side. In addition, the rigid core 5B is carried into the third work station 4c from the second work station 4b at the upstream side.

At that time, the identification sensor provided at the third work station 4c identifies the size B of the carried rigid core 5B and transmits the identification information to the storage part 15. At the storage part 15, the data on the attachment condition J8B for the size B is downloaded into the control unit 17 provided at the third work station 4c based on the transmitted identification information. Accordingly, the data in the control unit 17 is replaced with the data on the attachment condition J8B. Then, the control unit 17 controls the member assembly device 21c based on the data on the attachment condition J8B to form the tire constituent member T8B (inner bead core) for the size B on the carried rigid core 5B.

As described above, on the green tire formation line 1A, each time the rigid core 5 is carried into the work station 4, the size of the carried rigid core 5 is identified. Then, the member assembly devi ce 21 is controlled based on the data on the attachment condi ti on J accordi ng to the si ze of the carried ri gi d core 5, to form in sequence the ti re consti tuent member T accordi ng to the size of the rigid core 5.

Therefore, it is possible to form green tires of plural sizes simultaneously at random on one line in a reliable and effective manner without causing any confusion.

As shown in Fig. 1, the tire vulcanization line 1B has a plurality of vulcanization molds 18. On the tire vulcanization line 1B, a vulcanization step is performed to put the green tires 6 formed by the green tire formation line 1A with the rigid cores 5 into the vulcanization molds 18. The vulcanization molds 18 include vulcanization molds of plural sizes for formation of ti res different in size. In this example, the vulcanization molds 18 include vulcanization molds 18A, 18B, and 18C for the sizes A, B, and C. Preferably, the ratio among the numbers of the vulcanization molds 18A, 18B, and 18C is equal to the ratio among the numbers of the rigid cores 5A, 5B, and 5C. For example, when the ratio among the numbers of the rigid cores 5A, 5B, and 5C is 3: 2: 1, the ratio among the numbers of the vulcanization molds 18A, 18B, and 18C is preferably also 3: 2: 1. This makes it possible to maximize the working rate of the vulcanization molds 18.

The reference numeral 13 in Fig. 1 denotes a transfer cart 13. The transfer cart 13 receives the green tires 6 with rigid cores at the terminating end position P2 and puts the same into the vulcanization molds 18. Provided at the terminating end position P2 is an identification sensor (not shown) that identifies the size of the rigid core 5. Based on the identification information, the transfer cart 13 puts the green tire 6 with the rigid core into the vulcanization mold 18 of the appropriate size. The transfer cart 13 also delivers the vulcanized tire with the rigid core from the vulcanization mold 18 to a station 14. In the station 14, the rigid core 5 is removed from the vulcanized tire with the rigid core. The removed rigid core 5 is introduced again into the green ti re formation line from the starting end position P1.

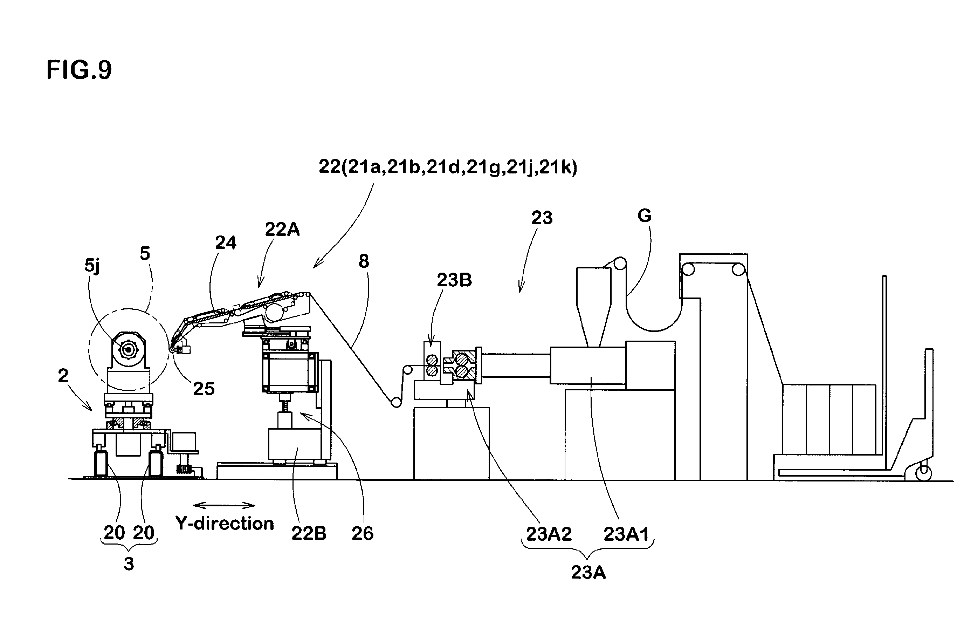

Figs. 9 to 12 show examples of the member assembly devices 21.

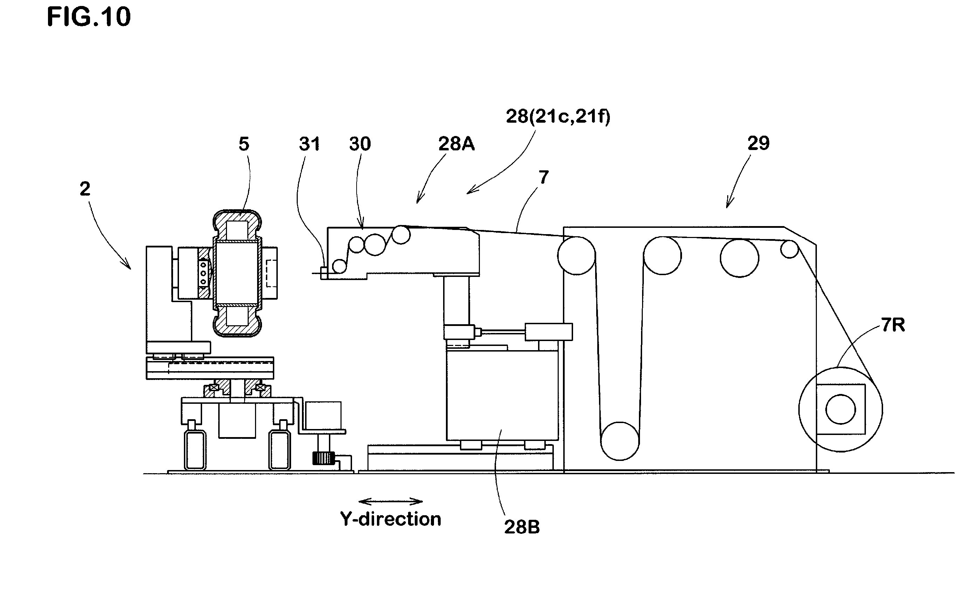

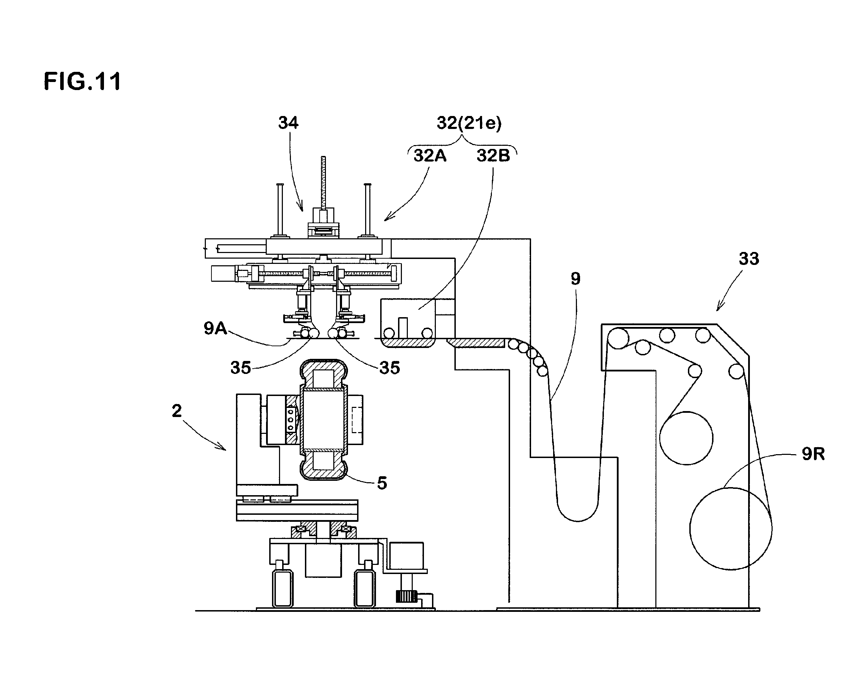

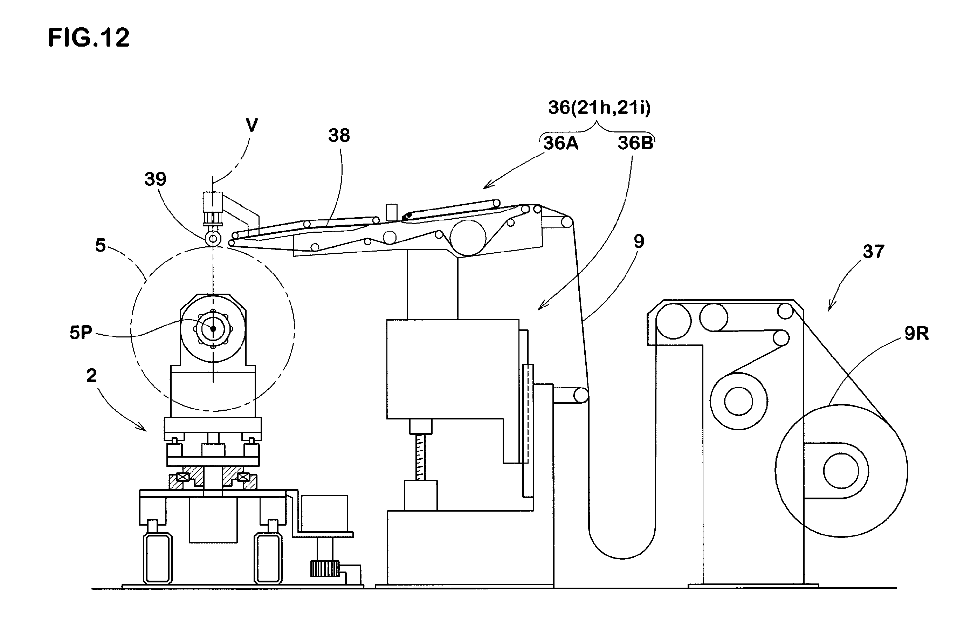

Rubber strip attachment device 22 as shown in Fig. 9 can be preferably employed as the member assembly devices 21a, 21b, 21d, 21g, 21j, and 21k. wire attachment device 28 as shown in Fig. 10 can be preferably employed as the member assembly devices 21c and 21f. Cord strip attachment device 32 as shown in Fig. 11 can be preferably employed as the member assembly device 21e. Cord strip attachment device 36 as shown in Fig. 12 can be preferably employed as the member assembly devices 21h and 21i.

As shown in Fig. 9, the rubber strip attachment device 22 includes an applicator 22A for attachment of a rubber strip and a moving stage 22B that moves the applicator 22A in a Y direction orthogonal to the track 3. The applicator 22A includes a belt conveyor 24 that receives the rubber strip 8 from a rubber strip supply device 23 and conveys the same to the front side in the Y direction and an attachment roller 25 that is disposed at a front end of the belt conveyor 24. The applicator 22A is adjusted in height via an elevating means 26 of a known structure such that a shaft center of the attachment roller 25 is positioned at the same height as the core shaft center 5j of the rigid core 5.

In this example, the rubber strip supply device 23 is a rubber strip formation device composed of a quantitative rubber extruder 23A and a calender device 23B disposed at a front end of the quantitative rubber extruder 23A. In this example, the quantitative rubber extruder 23A includes a gear pump 23A2 at a front end of a screw-type rubber extruder 23A1. The rubber strip formation device can intermittently supply a material rubber G introduced through a rubber inlet according to on/off operations of the gear pump 23A2, while forming the rubber strip 8 with a predetermined cross section shape from the material rubber G.

As shown in Fig. 10, the wire attachment device 28 includes an applicator 28A for attachment of a bead wire and a moving stage 28B that moves the applicator 28A in the Y direction. The applicator 28A includes a guide part 30 that is composed of a plurality of guide rollers guiding the rubberized wire 7 received from a wire supply device 29 to the front side in the Y direction and an attachment part 31 that is disposed at a front side of the guide part 30 and has an attachment roller. The guide part 30 can guide the rubberized wi re 7 in a zi gzag manner to correct a bend in the rubberized wi re 7. The attachment part 31 has a grip porti on (not shown) that grips a leading end of a roll of the rubberized wire 7 and presses the same against the rigid core 5. In this example, the wire supply device 29 is a reel stand that hol ds a reel 7R obtained by reel i ng up the rubberized wire 7 so as to be capable of rewinding.

As shown in Fig. 11, the cord strip attachment device 32 includes an applicator 32A for attachment of a cord strip and a guide part 32B. The guide part 32B cuts the cord strip 9 from a cord strip supply device 33 into the short strip pieces 9A and supplies the same to the applicator 32A. The applicator 32A includes winding-down rollers 35 supported by an elevating means 34. The applicator 32A lowers the winding-down rollers 35 to wind down and attach the short strip pieces 9A to the rigid core 5 along the outline of the rigid core 5. In this example, the cord strip supply device 33 is a reel stand that holds a reel 9R obtained by reeling up the cord strip 9 so as to be capable of rewinding.

As shown in Fig. 12, the cord strip attachment device 36 includes an applicator 36A for attachment of a cord strip and an elevating stage 36B that supports the applicator 36A so as to be capable of moving up and down. The applicator 36A includes a belt conveyor 38 that receives the cord strip 9 from a cord strip supply device 37 and conveys the same to the front side in the Y direction and an attachment roller 39 disposed at a front end of the belt conveyor 38. In this example, the attachment roller 39 is supported so as to move up and down on a vertical line V in which its shaft center passes through the core central point 5P at which the equator surface of the rigid core intersects with the core shaft center 5j. In the case of the belt ply T2, as shown in Fig. 8C, the short strip piece 9B is supplied in the Y direction and attached to the upper surface of the rigid core 5 in which the core shaft center 5j is inclined at an angle of (90° - θ) relative to the Y direction. In the case of the band ply T3, the cord strip 9 is supplied in the Y direction and continuously attached in a spiral manner to the upper surface of the rigid core 5 in which the core shaft center 5j is supported at an angle of 90° relative to the Y direction. In this example, the cord strip supply device 37 is a reel stand that holds the reel 9R obtained by reel i ng up the cord strip 9 so as to be capable of rewinding.

As in the foregoing, a particularly preferred embodiment of the present invention is described in detail. However, the present invention is not limited to the embodiment exemplified in the drawings but can be carried out in various modified modes.

### Reference Signs List

- 1: Tire manufacturing line
- 1A: Green tire formation line
- 1B: Tire vulcanization line
- 4: work station
- 5: Rigid core
- 6: Green tire
- 7: Rubberized wire
- 8: Rubber strip
- 9: Cord strip
- 9a: Tire cord
- 9b: Topping rubber
- 10: Control device
- 15: Storage part
- 17: Control unit
- 18: Vulcanization mold
- 21: Member assembly device
- J: Attachment condition
- M: Member material
- T: Tire constituent member
- TC: Cord ply member
- TG: Rubber member
- TW: Wire member

## Claims

1. A tire manufacturing method, comprising:
a green tire formation step of, on a green tire formation line having a plurality of work stations arranged along a track, forming a green tire composed of a plurality of tire constituent members by assembling the ti re constituent members to an outer surface of a rigid core moving on the track at the work stations; and
a vulcanization step of, on a tire vulcanization line having a plurality of vulcanization molds, putting the green tire with the rigid core into the vulcanization molds to vulcanize the green ti re, wherein
the green tire formation line includes a member assembly device that is arranged at each of the work stations and controlled by a control device,
the rigid core includes rigid cores of plural sizes to form tires of plural sizes and the vulcanization molds include vulcanization molds of plural sizes to form tires of plural sizes,
each of the plurality of tire constituent members constituting one green tire is formed by attaching a member material set for each of the tire constituent member by the member assembly device under an attachment condi ti on determined accordi ng to the si ze of the ri gi d core, and
the green tire formation step includes:
each ti me the ri gi d core is carried into the work station, identifying by an identification sensor the size of the carried rigid core; and
determining data on the attachment condition according to the identified size from identification information from the identification sensor and data on the attachment condition for the member material according to the size of the rigid core stored in advance in the control device, and controlling the member assembly device at the work station into which the rigid core is carried based on the determined data on the attachment condition.

2. A tire manufacturing line, comprising:
a green ti re formation line having a plurality of work stations arranged along a track, on which a green ti re composed of a plurality of tire constituent members is formed by assembling the tire constituent members to an outer surface of a rigid core moving on the track at the work stations; and
a ti re vulcanization line having a plurality of vulcanization molds, on which the green tire with the rigid core is vulcanized, wherein
the green ti re formation line includes a member assembly device that is arranged at each of the work stations and assembles the tire constituent member to the outer surface of the rigid core and a control device that controls each of the member assembly devices,
the rigid core includes rigid cores of plural sizes to form tires of plural sizes and the vulcanization molds include vulcanization molds of plural sizes to form tires of plural sizes,
each of the plurality of tire constituent members constituting one green tire is formed by the member assembly device attaching a member material for tire constituent member set for each of the tire constituent member under an attachment condition determined according to the size of the rigid core, and
the control device includes:
a storage part that stores data on the attachment condition for the member material according to the size of the rigid core;
an identification sensor that, each time the rigid core is carried into the work station, identifies the size of the carried rigid core; and
a control unit that controls the member assembly device at the work station into which the rigid core is carried, based on data on the attachment condition according to the identified size determined from identification information from the identification sensor and data on the attachment condition for the member material according to the size of the rigid core stored in advance in the control device.

3. The tire manufacturing line according to claim 2, wherein
the control unit is provided to each of the member assembly devices,
the storage part downloads into the control unit data on the attachment condition according to the identified size, based on the identification information from the identification sensor, and
the control unit controls the member assembly device at the work station into which the rigid core is carried, based on the downloaded data on the attachment condition.

4. The tire manufacturing line according to claim 2 or 3, wherein
the tire constituent members are divided into rubber members including a tread rubber and a side wall rubber, cord ply members including a carcass ply and a belt ply, and wire members including a bead core,
an elongated tape-like rubber stri pis used as member materials for the rubber members,
an elongated tape-like cord strip formed by covering an arrangement of tire cords aligned in the longitudinal direction with a topping rubber is used as member materials for the cord ply members, and
a rubberized wire is used as member materials for the wire members.
